Europäisches Patentamt

(19) European Patent Office

Office européen des brevets

(11) Numéro de publication: **0 275 504**
**B1**

(12) **FASCICULE DE BREVET EUROPEEN**

(45) Date de publication du fascicule du brevet:
07.03.90

(21) Numéro de dépôt: **87118738.1**

(22) Date de dépôt: **17.12.87**

(51) Int. Cl.⁴: **F16H 25/22**

(54) **Vis à rouleaux satellites recirculés.**

(30) Priorité: **23.12.86 CH 5156/86**

(43) Date de publication de la demande:
**27.07.88 Bulletin 88/30**

(45) Mention de la délivrance du brevet:
**07.03.90 Bulletin 90/10**

(84) Etats contractants désignés:
**AT BE DE ES FR GB GR IT LU NL SE**

(56) Documents cités:
**FR-A- 2 111 340**
**US-A- 3 884 090**

(73) Titulaire: **Duruisseau, Bernard, Le Genevois, F-74160 St Julien en Genevois(FR)**

(72) Inventeur: **Duruisseau, Bernard, Le Genevois, F-74160 St Julien en Genevois(FR)**

(74) Mandataire: **Moinas, Michel, Moinas & Cie 42, rue Plantamour, CH-1201 Genève(CH)**

ACTORUM AG

## Description

La présente invention a pour objet une vis à rouleaux satellites recirculés utilisée en mécanique pour imprimer à un objet quelconque un mouvement de translation extrêmement précis, de l'ordre du micron.

Un tel système est connu du document FR-A 2 111 340 ou US-A 3 884 090 révélant les caractéristiques du préambule de la revendication 1.

On rencontre dans l'industrie de nombreuses situations dans lesquelles une pièce doit être déplacée selon une ligne droite sur une distance très précise. C'est le cas, par exemple, dans un instrument de mesure optique d'une lentille dont on ajuste la position par rapport à un rayon lumineux. Un autre exemple se trouve dans les laminoirs où l'écart entre deux rouleaux pesant respectivement environ 100 kg est réglé à 10 microns près.

Le problème, dans ces situations, est de convertir un déplacement visible à l'échelle humaine, donc de l'ordre du centimètre, en un mouvement infinitésimal. Une telle méthode de réduction, parmi beaucoup d'autres, consiste en la rotation d'une vis dans un écrou fixe. Ainsi, pour un pas de vis commun de 1 mm, un tour de vis complet correspond à un déplacement longitudinal de la vis de 1 mm, et un centième de tour correspond à un déplacement de 10 microns. Il est, à l'heure actuelle, aisé de réaliser une rotation de 1/100 tour, par exemple, à l'aide d'un volant de 1 m de circonférence solidaire de la vis ou d'un moteur électrique pas-à-pas.

Par ailleurs, le frottement de glissement, que l'on trouve notamment entre une vis et son écrou, a pour particularité de baisser brutalement de valeur lors du début d'un mouvement. En d'autres termes, la résistance initiale au mouvement tant que la vis est immobile est nettement supérieure à la résistance lorsque cette même vis a commencé sa rotation. Ce phénomène empêche tout déplacement de faible valeur car il est impossible de réduire immédiatement le couple appliqué initialement à la vis pour la mettre en mouvement.

Afin de palier à cet inconvénient, on intercale entre la vis et l'écrou, sur tout le pourtour, une série de rouleaux à gorges circulaires substituant ainsi un frottement de roulement, toujours constant, au frottement de glissement. Afin de diminuer au maximum ces frottements de roulement, l'ensemble est fabriqué en un matériau dur tel que l'acier et le filetage de la vis ainsi que de l'écrou sont rectifiés à 90° selon des flancs droits alors que les gorges circulaires sont rectifiées à 90° sous une forme d'ogive. Il n'y a donc qu'un seul point de contact entre chaque gorge et les filets respectifs. Un nouveau problème apparaît alors dans le fait que ces rouleaux tournant avec la vis se déplacent aussi longitudinalement et risquent de sortir de l'écrou. Il faut donc prévoir un mécanisme pour recirculer les rouleaux, c'est-à-dire les ramener régulièrement au centre de l'écrou.

Cette recirculation est usuellement réalisée au moyen d'une gorge pratiquée longitudinalement dans le filetage de l'écrou et de deux cames situées à l'entrée et à la sortie de ce dernier. Ainsi, lorsqu'au cours de sa rotation autour de la vis un rouleau se présente devant la gorge, il est poussé hors des filets de la vis par l'une des deux cames qui le dirige vers l'intérieur de l'écrou sur une distance équivalente à un ou deux pas de vis selon la valeur du ressaut de la came. Puis ce rouleau est poussé latéralement par la cage porte-rouleaux de retour dans les filets où il reprend sa course.

Pour autant qu'il fonctionne, ce système présente de nombreux inconvénients. En effet, lorsque le rouleau vient buter sur la came, il se produit un léger choc. Lors d'un usage intensif du système, par exemple un mouvement de va-et-vient continuel à la vitesse de 300 tr/mn, la séquence de ces chocs génèrent des vibrations dans l'ensemble de la machine ainsi qu'un bruit désagréable. Selon la configuration de la machine ces vibrations peuvent s'amplifier et conduire ainsi à une usure prématurée préjudiciable à la fiabilité générale. De plus l'usure de la came produit de la limaille de fer qui peut s'infiltrer dans les filets et ruiner ainsi la précision du déplacement de la vis.

Un deuxième inconvénient vient de la nécessité pour le rouleau d'être déplacé par la came d'une distance strictement égale au pas de vis, sous peine de créer un "point dur", c'est-à-dire un coincement notable au moment où le rouleau réintègre le filet de la vis et de l'écrou. Compte-tenu que la came et le rouleau sont manufacturés séparément, ceci implique un ajustage précis de la hauteur du ressaut de la came, et de la face d'appui du rouleau par rapport à ses gorges. Ces conditions entraînent un rebût important de pièces lors de la fabrication et un assemblage délicat, augmentant d'autant le coût final de la vis.

L'objet de cette invention est de résoudre les problèmes précités en proposant un mécanisme évitant premièrement l'avénement de chocs. Il doit de plus autoriser de manière générale une tolérance plus large dans les dimensions des éléments. Par ailleurs, le mécanisme, selon l'invention, doit être constitué de pièces standards, ou de conception simple, leur permettant ainsi d'être fabriquées et assemblées plus facilement, réduisant d'autant le coût final.

Ces buts sont atteints, selon l'invention, grâce à une vis à rouleaux satellites recirculés comprenant un écrou fileté, une vis filetée maintenue au centre de l'écrou par une série de rouleaux disposés sur son pourtour, un espace de dégagement pour la recirculation des rouleaux et un couvercle vissé à chaque extrémité de l'écrou laissant un libre passage à la vis mais retenant les rouleaux à l'intérieur de l'écrou, caractérisé en ce que les rouleaux disposent à chacune de leurs extrémités de moyens élastiques qui tendent à les ramener au centre de l'écrou.

Selon un mode d'exécution avantageux, le moyen élastique comprend une cavité pratiquée dans l'axe du rouleau contenant un ressort poussant une goupille hors de la cavité, goupille prenant appui sur le couvercle fileté.

Il peut s'avérer utile de réaliser le couvercle fileté en téflon ou en nylon ou en plastique.

Selon un deuxième mode de réalisation, le moyen élastique prend appui sur un chemin de bille comprenant le couvercle fileté, une série de billes éventuellement logées dans un sillon et une rondelle de maintien.

Selon un troisième mode de réalisation, la rondelle de maintien du chemin de bille fait partie intégrante de la cage porte-rouleaux.

Selon un quatrième mode de réalisation, les rouleaux sont maintenus en position les uns rapport aux autres par deux rondelles épaisses, une supérieure et une inférieure, comportant chacunes des encoches où viennent se loger les extrémités lisses des rouleaux et reposant au travers de chemin de bille sur leurs couvercles respectifs.

Suivant une autre caractéristique, une ou plusieurs gorges de dégagement, où s'effectue la recirculation des rouleaux, sont pratiquées le long de la vis filetée.

En variante, seule une moitié d'un rouleau est munie de gorges, le reste étant lisse, et les rouleaux ainsi constitués sont disposés en opposition l'un par rapport à l'autre sur le pourtour de la vis filetée.

L'invention est décrite ci-après de façon plus détaillée à l'aide d'exemples d'éxécution, sans caractère limitatif, illustrés au dessin annexe, dans lequel :

- la figure 1 est une vue en coupe longitudinale de la vis à rouleaux recirculée, où la vis filetée est représentée en entier et où seule la partie inférieure des rouleaux est présentée en coupe,
- les figures 2 à 4 présentent des vues détaillées en coupe de différents modes d'appui de la goupille,
- la figure 5 est une vue en coupe transversale présentant une autre forme d'éxécution de la gorge de dégagement,
- la figure 6 est une vue en coupe longitudinale d'une variante du rouleau.

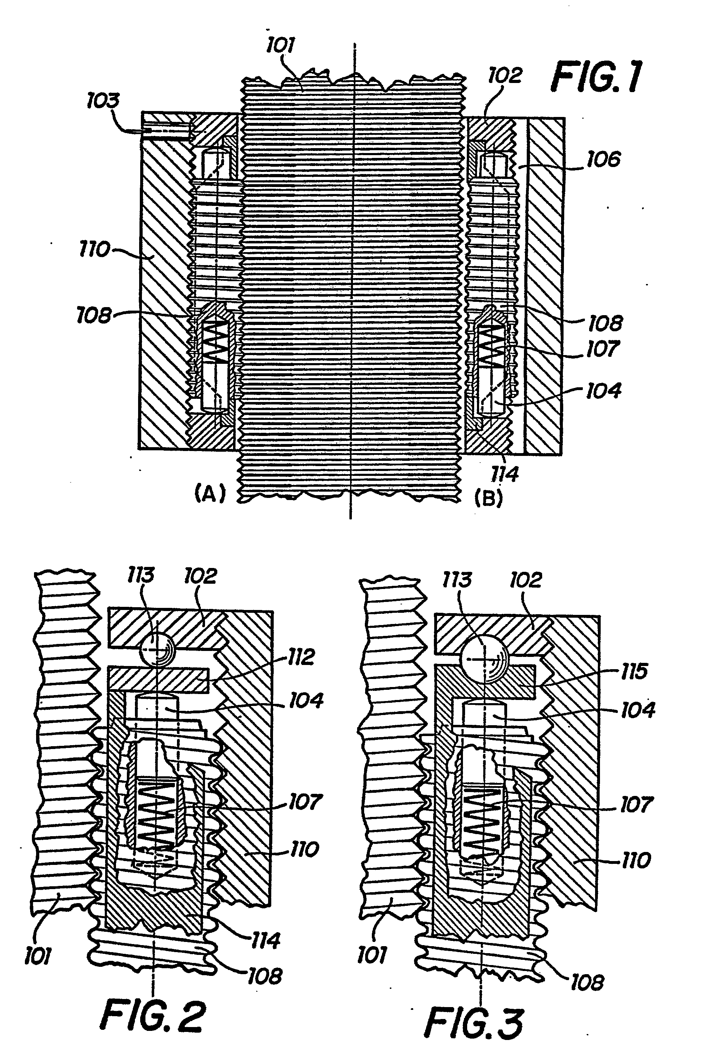

En référence à la figure 1, le mécanisme comprend un écrou fileté 110, une vis filetée 101, une série de rouleaux 108 à gorges circulaires intercalés entre la vis et l'écrou et deux couvercles 102, supérieur et inférieur, laissant un libre passage à la vis filetée mais retenant les rouleaux à l'intérieur de l'écrou. Chaque couvercle est bloqué en position par une vis 103. Comme il est présenté sur le côté A de la figure 1, les gorges des rouleaux 108 sont engagées à la fois dans les filets de l'écrou 110 et ceux de la vis 101. De façon usuelle, ces gorges sont manufacturées de telle sorte qu'elles ne présentent qu'un seul point de contact avec chaque filet respectif, ceci afin de réduire les frottements de roulement. Ces rouleaux sont maintenus en position l'un par rapport à l'autre grâce à une cage 114 dont la base est libre de tourner au sein des couvercles 102. Compte-tenu que seuls des frottements de roulement sont en jeu, on peut ainsi faire tourner très lentement la vis 101 selon les besoins.

L'écrou 110 est généralement solidaire du chassis de la machine, et la vis est alors utilisée pour déplacer la pièce dont la position est à régler. Une utilisation inversée est aussi possible. Dans ce cas la vis filetée, supportée par des paliers, est solidaire de l'axe d'un moteur la faisant tourner, résultant en la translation le long de la vis de l'écrou.

Il apparâit de manière évidente que lors de la rotation de la vis, les rouleaux roulent à la fois le long de la vis mais aussi le long de l'écrou, soit un mouvement de translation de ces rouleaux le long de l'écrou en direction de l'un des deux couvercles. Afin de permettre une recirculation des rouleaux arrivés en position extrême, une gorge de dégagement 106, est ménagée au sein du filetage de l'écrou dans le sens longitudinal, tel qu'il est représenté sur le côté B de la figure 1.

Pendant le mouvement de translation du rouleau, la goupille 104 prenant appui sur le couvercle 102 correspondant comprime le ressort 107 qui lui est adjacent. Lorsque ce même rouleau se retrouve dans la gorge de dégagement, il n'est plus tenu du côté de l'écrou, et, sous l'action du ressort, il se désolidarise des filets de la vis. Il se trouve ainsi libre de se mouvoir. Le ressort 107 comprimé se détend, poussant alors le rouleau de retour vers le milieu de l'écrou. Une fois parvenu à la position médiane, les deux ressorts 107, l'un supérieur, l'autre inférieur, s'équilibrent, le rouleau se stabilise.

La cage 114, entraînée par les autres rouleaux, pousse le rouleau libre de retour dans les filets de l'écrou et de la vis. Selon les cas, un ultime déplacement du rouleau vers le haut ou vers le bas est imprimé par les filets sur les gorges. Alors que la présence de la câme empêchait ce mouvement dans l'un des deux sens, créant ainsi un "point dur", celui ci est maintenant possible en souplesse grâce aux ressorts 107.

La largeur de la gorge 106 est normalement à peu près égale au diamètre du rouleau afin de ne libérer qu'un seul rouleau à la fois. Dand les cas où le nombre de rouleaux est important, par exemple supérieur à dix, des essais en laboratoire on montré qu'il est intéressant de tailler une gorge de largeur égale à la distance comprise entre deux rouleaux voisins de telle sorte qu'un rouleau se dégage au moment où son prédécesseur réintègre les filets, atténuant de mieux le léger choc général.

On remarque que la longueur de chaque rouleau 108 ainsi que l'épaisseur des couvercles 102 ne sont plus critiques. Le décolletage des trous à chaque extrémité des rouleaux est une opération de fabrication simple. L'approvisionnement dans le commerce de ressorts et de goupilles de tolérance moyenne peut être effectué à bas prix. En enduisant le côté des goupilles de graisse visqueuse, celles-ci restent en place dans les rouleaux lors du montage, qui devient plus aisé. L'invention permet donc la réalisation de vis plus performantes à moindre coût.

Dans la version de base, les extrémités arrondies des goupilles 104 frottent sur le couvercle fileté 102, lors de leurs déplacements sur le pourtour intérieur de l'écrou 110. Afin de réduire l'intensité de ces frottements de glissement, on peut préférer le téflon, le nylon ou le plastique comme matériau de fabrication de ces couvercles. De plus, ces derniers peuvent disposer de parties ensserant légèrement la vis 101 faisant alors office de râcleur de poussière.

Sur la figure 2 est présenté un second mode de réalisation dans lequel la goupille 104 prend appui sur le couvercle 102 au travers d'un chemin de bille constitué de la série de billes 113 et de la rondelle 112, éléments que l'on trouve couramment dans le commerce. Cette amélioration trouve surtout son intérêt lors d'utilisation continue de la vis pendant laquelle le frottement de glissement permanent des goupilles sur le couvercle conduit à un échauffement et des pertes de puissance mécanique. Suivant la dimension des billes retenue, on prévoit éventuellement une gorge de roulement ménagée sur l'une ou les deux faces à la fois.

La figure 3 montre un troisième mode de réalisation de l'invention dans lequel la rondelle précédente est solidaire de la cage porte-rouleaux pour ne constituer qu'une seule et même pièce 115. Dans cette configuration, les derniers frottements de glissement éventuels de la version précédente, notamment entre les goupilles ou la cage et le couvercle, sont totalement éliminés pour ne laisser que des frottements de roulement faibles au niveau des billes 113. Mais le prix du mécanisme est légèrement augmenté.

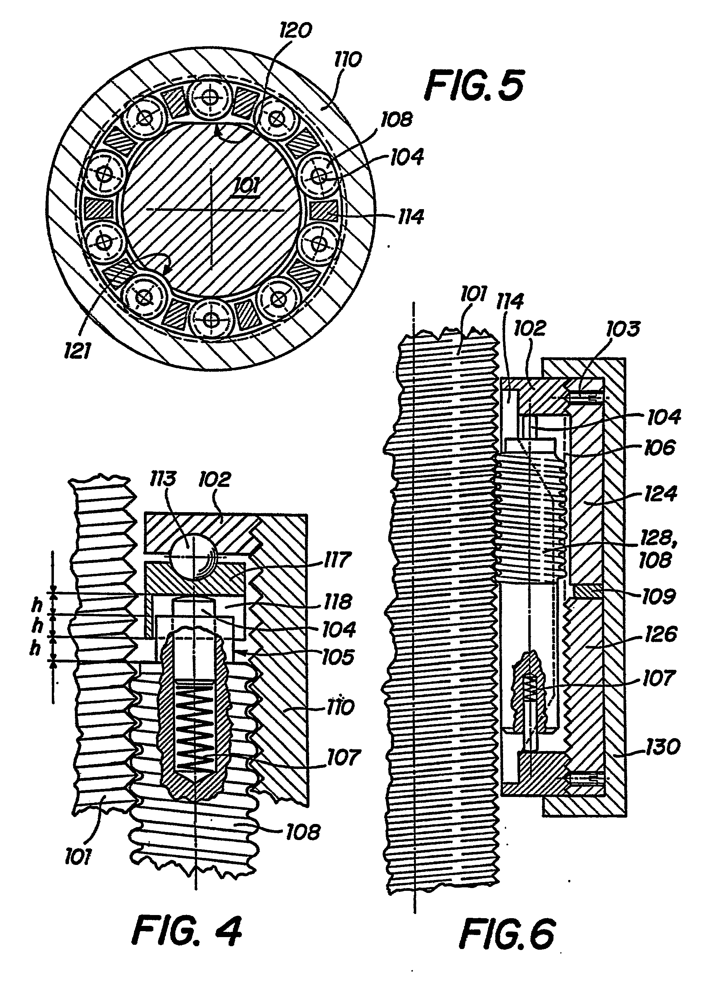

Dans les cas où la course des rouleaux entre chaque recirculation est faible, soit inférieure à 8 mm par exemple, ceci dû soit à un faible pas de vis ou selon le procédé exposé plus tard selon la figure 5, il est alors possible de remplacer la cage porte-rouleaux 114, plutôt onéreuse à la fabrication, par deux rondelles modifiées 117, une supérieure et une inférieure, présentées sur la figure 4. Ces épaisses rondelles disposent sur leur pourtour d'encoches profondes 118 dans lesquelles viennent se placer des rouleaux 108 modifiés, c'est-à-dire comportant à chacune de leur extrémité une partie lisse 105 de diamètre légèrement inférieur à la largeur de l'encoche 118.

Le rouleau 108 présenté sur la figure 4 étant exactement en position médiane par rapport à l'écrou 110, on note que la profondeur de l'encoche 118 ainsi que la longueur de la partie lisse 105 sont au moins supérieures au double de la course maximum h du rouleau 108 entre deux recirculations. Comme précédemment, un chemin de bille 113 diminue les forces de frottement, donc les pertes de puissances mécaniques.

Outre la simplicité accrue du mécanisme, ce dispositif permet de rapprocher chaque rouleau les uns par rapport aux autres, donc d'en augmenter le nombre le long d'un pourtour donné, ce qui a comme conséquence d'augmenter la charge axiale maximum autorisée sur la vis. De plus, il a été constaté que chaque réinsertion de rouleau dans les filets tend à réaligner les deux rondelles 117 l'une par rapport à l'autre.

Compte-tenu que la position de la gorge de dégagement 106 n'est plus imposée par la position de la câme, il s'est révélé avantageux de tailler cette gorge sur la vis filetée même, par exemple sous la forme d'un plat 120 pratiqué longitudinalement sur la vis tel qu'il est présenté sur la figure 5. Ceci peut simplement être réalisé par décolletage sur la vis.

Une deuxième forme d'encoche 121 exclut tout angle vif et apporte ainsi un élément supplémentaire de souplesse lors de la rentrée du rouleau 108 dans les filets après recirculation.

Plus important est le fait que, dans cette configuration, le rouleau ne soit plus recirculé après avoir accompli un tour complet autour de l'écrou, soit un déplacement longitudinal égal au pas de vis, mais dès que la gorge pratiqué sur la vis rattrape ce rouleau, ce qui intervient beaucoup plus tôt. La fréquence et la position de la recirculation d'un rouleau donné dépend essentiellement du diamètre extérieur de la vis et du diamètre intérieur de l'écrou où se situent respectivement les filets. A titre d'exemple, les proportions du mécanisme présenté sur la figure 5 implique une recirculation d'un rouleau après qu'il ait accompli seulement 2/3 de tour autour de l'écrou. Ce rouleau s'est alors déplacé longitudinalement de 2/3 de la valeur du pas de vis. On peut ainsi diminuer l'espace dans l'écrou affecté aux mouvements des rouleaux, telle que la distance h sur la figure 4. De façon réciproque, pour un espace de mouvement donné, par exemple 6 mm, il devient possible de tailler dans l'écrou un taraudage à multiples entrées de filet et de pas plus long. Ce dernier taraudage est fabriqué plus rapidement que celui à entrée unique.

Il est important de rappeler que la recirculation de tous les rouleaux ne se fait plus en un point unique, mais sur tout le pourtour de l'écrou. Il y a maintenant symétrie de l'opération du mécanisme par rapport à l'axe central.

Dans le cas de vis filetée de large diamètre, impliquant un nombre important de rouleaux autour, il peut s'avérer utile de tailler plusieurs gorges de dégagements équidistantes sur le périmètre de la vis afin de permettre une recirculation encore plus fréquente.

Selon les circonstances, il peut s'avérer nécessaire de "précharger" la vis : soit pour éliminer tout jeu axial entre la vis filetée et l'écrou, soit pour augmenter la rigidité de l'ensemble ou pour augmenter le couple minimum nécessaire pour commencer la rotation de la vis. Un tel dispositif de précharge est présenté sur la figure 6 où l'écrou est constitué d'une partie supérieure 124, d'une partie inférieure 126, toutes deux filetées et d'une câle 109 calibrée, le tout enserré dans un boîtier 130. L'épaisseur de la câle 109 est légèrement inférieure ou supérieure au pas de vis. Dans le cas où l'épaisseur de la câle est inférieure au pas de vis, tous les filets du taraudage de la partie 124 appuient vers le bas sur le rouleau 108, alors que tous les filets du taraudage de la partie 126 appuient vers le haut sur ce même rouleau. Ce rouleau se trouve ainsi forcé contre la vis filetée. Ce serrage augmente les frottements de roulement, donc le couple minimum à appliquer pour commencer la rotation de la vis.

Dans cette situation, il apparaît un point dur au moment de la réintégration d'un rouleau dans les filets. Afin de diviser par deux l'intensité de ces coincements, les rouleaux 128 sur la figure 6 présentent une moitié lisse et l'autre moitié comportant des gorges. Ces rouleaux 128 sont disposés en alternance sur le pourtour de la vis, c'est-à-dire qu'à la suite d'un rouleau "supérieur" se trouve un rouleau "inférieur", et ils sont recirculés alternativement. La gorge de dégagement supérieur peut être décalée par rapport à celle inférieure, et ce décalage tiendra compte de la nécessité, ou pas, de recirculer deux rouleaux simultanément. Ce dispositif respecte ainsi la symétrie d'opération par rapport à la section médiane.

Le progrès apporté par l'invention aux vis à rouleaux recirculés peut s'appliquer aussi bien aux mécanismes de petites dimensions qu'aux grosses unités. La vis présentée sur la figure 1, caractérisée entre autre par l'appui des goupilles directement sur des couvercles en téflon, par la gorge de déplacement placé à l'intérieur de l'écrou, est préféré pour actionner une petite pièce tel que, en électronique, un potentiomètre linéaire. Cette vis correspond à la présentation de base la moins onéreuse à l'heure actuelle. Le choix des options tel que le roulement à bille, le remplacement de la cage porte-rouleaux par la rondelle 117, le positionnement de la gorge de dégagement sur l'écrou ou sur la vis ainsi que les rouleaux partiellement lisses est fait en fonction de l'utilisation particulière de chaque vis, des impératifs techniques et économiques.

Soit une pièce lourde dont la position ne varie que sur un millimètre, la vis utilisée pour la manoeuvrer doit comporter des filets épais, donc un pas de vis important. On utilise alors de préférence une rondelle de maintien 117 circulant sur un chemin de bille et une vis filetée comportant, elle, une ou plusieurs gorges de dégagement 121, ce pour limiter le déplacement longitudinal des rouleaux.

Afin de permettre une bonne lubrification jusqu'au niveau des ressorts 107, il peut s'avérer utile de percer un trou longitudinal de part en part de la goupille.

## Revendications

1. Vis à rouleaux satellites recirculés comprenant un écrou fileté (110), une vis filetée (101) maintenue au centre de l'écrou par une série de rouleaux (108) disposée sur son pourtour, un espace de dégagement (106, 120, 121) pour la recirculation des rouleaux et un couvercle (102) vissé à chaque extrémité de l'écrou laissant un libre passage à la vis mais retenant les rouleaux à l'intérieur de l'écrou, caractérisée en ce que les rouleaux disposent à chacune de leurs extrémités de moyens élastiques (107) qui tendent à les ramener au centre de l'écrou.

2. Vis à rouleaux satellites recirculés selon la revendication 1, caractérisée en ce que le moyen élastique comprend une cavité pratiquée longitudinalement dans l'axe du rouleau (108) contenant un ressort (107) poussant une goupille (104) hors de la cavité, goupille prenant appui sur le couvercle fileté (102).

3. Vis à rouleaux satellites recirculés selon la revendication 1, caractérisée en ce que les couvercles filetés (102) sont réalisés en téflon ou en nylon ou en plastique.

4. Vis à rouleaux satellites recirculés selon la revendication 1, caractérisée en ce que le moyen élastique (107) de chaque rouleau (108) prend appui sur un chemin de bille comprenant le couvercle fileté, une série de billes (113) éventuellement logée dans un sillon et une rondelle de maintien (112).

5. Vis à rouleaux satellites recirculés selon la revendication 4, caractérisée en ce que la rondelle de maintien du chemin de billes (115) fait partie intégrante de la cage porte-rouleaux (114).

6. Vis à rouleaux satellites recirculés selon la revendication 1, caractérisée en ce que les rouleaux (108) sont maintenus en position l'un par rapport aux autres par deux rondelles épaisses (117), une supérieure, une inférieure, comportant chacune des encoches (118) où viennent se loger les extrémités lisses (105) des rouleaux (108) et reposant au travers de chemin de bille sur leur couvercle (102) respectif.

7. Vis à rouleaux satellites recirculés selon la revendication 1, caractérisée en ce qu'une ou plusieurs gorges de dégagement (120, 121), où s'effectuent la recirculation des rouleaux, sont pratiquées le long de la vis filetée.

8. Vis à rouleaux satellites recirculés selon la revendication 1 caractérisée en ce que seule une moitié d'un rouleau (118) est munie de gorges, le reste étant lisse, et les rouleaux ainsi constitués sont disposés en opposition les uns par rapport aux autres sur le pourtour de la vis filetée (101).

## Claims

1. A differential roller nut comprising a threaded nut (110), a threaded screw (101) held in the centre of the nut by a series of rollers (108) arranged about its periphery, a disengagement space (106, 120, 121) for recirculation of the rollers, and a cover (102) screwed to each end of the nut allowing the screw to pass freely but holding the rollers inside the nut, characterised in that the rollers are provided at each of their ends with elastic means (107) tending to biais them towards the middle of the nut.

2. A differential roller according to claim 1, characterised in that the elastic means comprises a cavity provided longitudinally along the roller (108)'s axis and containing a spring (107) pushing a pin (104) out of the cavity, this pin bearing against the threaded cover (102).

3. A differential roller nut according to claim 1, characterised in that the threaded covers (102) are made of Teflon, of nylon or of plastics material.

4. A differential roller nut according to claim 1, characterised in that the elastic means (107) of each roller (108) bears against a ball bearing race which comprises the threaded cover, a series of balls (113) possibly housed in a groove and a restraining washer (112).

5. A differential roller nut according to claim 4, characterised in that the restraining washer of the ball bearing is an integral part (115) of a roller-carrying cage (114).

6. A differential roller nut according to claim 1, characterised in that the rollers (108) are held in position relative to one another by two thick washers (117), an upper one and a lower one, each having notches (118) where smooth ends (105) of the rollers (108) are received by coming to rest through the ball-bearing race on their respective cover (102).

7. A differential roller nut according to claim 1, characterised in that one or several disengagement recesses (120, 121), where recirculation of rollers takes place, are provided along the threaded screw.

8. A differential roller nut according to claim 1, characterised in that only one half of a roller (118) is provided with grooves, the remainder being smooth and the thus-constituted rollers are arranged alternately upside down in relation to one another about the periphery of the threaded screw (101).

## Patentansprüche

1. Differentialrollenschraubtrieb bestehend aus einer Gewindemutter (110), aus einer im Zentrum der Mutter von einer Reihe auf ihrem äußeren Umfang angeordneter Rollen (108) festgehaltenen Gewindeschraube (101), aus einem Freiraum (106, 120, 121) für den Rücklauf der Rollen und aus einem an jedem Ende der Mutter angeschraubten Deckel (102), durch welchen die Schraube freien Durchgang erhält, die Rollen aber im Inneren der Mutter zurückgehalten werden, dadurch gekennzeichnet, daß die Rollen an jedem ihrer Enden elastische Mittel (107) aufweisen, mit welchen sie in das Zentrum der Mutter zurückgeholt werden.

2. Differentialrollenschraubtrieb gemäß Anspruch 1, dadurch gekennzeichnet, daß das elastische Mittel aus einer in die Rollenachse (108) eingelassenen länglichen Vertiefung mit einer Feder (107) besteht, von welcher ein Stift (104) aus der Vertiefung hinausgedrückt wird, wobei der Stift auf dem Gewindedeckel (102) zur Anlage kommt.

3. Differentialrollenschraubtrieb gemäß Anspruch 1, dadurch gekennzeichnet, daß die Gewindedeckel (102) aus Teflon, Nylon oder Kunststoff hergestellt sind.

4. Differentialrollenschraubtrieb gemäß Anspruch 1, dadurch gekennzeichnet, daß das elastische Mittel (107) jeder Rolle (108) auf einem Kugellagerring zur Anlage kommt, welcher aus dem Gewindedeckel, aus einer Reihe eventuell in einer Rille gelagerter Kugeln (113) und aus einer Haltescheibe (112) besteht.

5. Differentialrollenschraubtrieb gemäß Anspruch 4, dadurch gekennzeichnet, daß die Haltescheibe des Kugellagerringes (115) integrierender Bestandteil des Rollenkäfigs (114) ist.

6. Differentialrollenschraubtrieb gemäß Anspruch 1, dadurch gekennzeichnet, daß die Rollen (108) von zwei starken Scheiben (117), einer oberen und einer unteren, zueinander in ihrer Stellung gehalten werden, von denen jede Vertiefungen (118) aufweist, in denen die glatten Enden (105) der Rollen (108) gelagert sind und welche quer über dem Kugellagerring auf ihrem jeweiligen Deckel (102) aufliegen.

7. Differentialrollenschraubtrieb gemäß Anspruch 1, dadurch gekennzeichnet, daß entlang der Gewindeschraube eine oder mehrere Rillen (120, 121) eingebracht sind, in welchen der Rücklauf der Rollen erfolgt.

8. Differentialrollenschraubtrieb gemäß Anspruch 1, dadurch gekennzeichnet, daß nur eine Hälfte der Rolle (128) mit Rillen versehen und der Rest glatt ist und wobei die so beschaffenen Rollen einander gegenüber auf dem äußeren Umfang der Gewindeschraube (101) angeordnet sind.

FIG.1

FIG.2

FIG.3

*FIG.5*

*FIG. 4*

*FIG.6*